# EUROPÄISCHE PATENTSCHRIFT

(11) **EP 0 264 475 B1**
(45) Veröffentlichungstag und Bekanntmachung des Hinweises auf die Patenterteilung: **02.03.1994**
(21) Anmeldenummer: 86114600.9
(22) Anmeldetag: 21.10.1986
(51) Int. Cl.: B23D 43/06

(54) **Drehräumwerkzeug**
Rotational broaching cutter
Outil de brochage rotatif

(43) Veröffentlichungstag der Anmeldung: 27.04.1988
(73) Patentinhaber: Wilhelm Hegenscheidt Gesellschaft mbH, D-41804 Erkelenz (DE)
(72) Erfinder: Berstein, Garri, Dr.-Ing., D-5140 Erkelenz (DE); Obrig, Hans W., Dr.-Ing., D-4300 Essen (DE); Wittkopp, Helmut, Dipl.-Ing., D-5410 Erkelenz (DE)
(74) Vertreter: Aubele, Karl B.

(56) Entgegenhaltungen:
- US-A- 2 468 745
- PATENT ABSTRACTS OF JAPAN, Band 7, Nr. 279 (M-262)[1424], 13. Dezember 1983; & JP-A-58 155 125 (HITACHI SEISAKUSHO K.K.) 14-09-1983

## Beschreibung

Die Erfindung betrifft eine Verwendung eines um eine zentrale Achse drehbaren Räumwerkzeuges zum Bearbeiten eines um eine Achse rotierbaren Werkstücks in einer Drehräummaschine.

Das Drehräumen an sich ist ein bekanntes Fertigungsverfahren, so daß an dieser Stelle dieses Fertigungsverfahren nicht näher beschrieben werden muß. Es sei hier beispielsweise verwiesen auf ein Prospekt der Firma Heinlein mit dem Titel "Drehräumen, neues Fertigungsverfahren für die Massenproduktion". In dem genannten Prospekt wird unterschieden zwischen dem dort sog. "Linear-Drehräumen" und dem dort sog. "Rotations-Drehräumen". Um Werkzeuge für das letztgenannte Verfahren geht es bei der Erfindung.

Das Drehräumen ist ein Fertigungsverfahren, bei dem hohe Zerspanungsleistung erzielt wird. Soweit es das Lineardrehräumen angeht, besteht jedoch der Nachteil des Zeitverlustes für den Rückhub des Werkzeugs und für den Werkstückwechsel. Zur Erzielung der hohen Zerspanungsleistung sind die Drehräumwerkzeuge sehr eng mit Schneidkanten bildende Schneidplatten besetzt.

Bei der Variante des Rotationsdrehräumens ist das bisher gerade Werkzeug gekrümmt gestaltet so daß die einzelnen Schneidkanten bildenden Schneidplatten entlang einer gekrümmten Kontur angeordnet sind, wodurch es gelingt, die bisherige translatorische Bewegung des Werkzeugs in eine rotatorische Bewegung umzuwandeln. Das Prinzip eines solchen Werkzeugs ist in dem genannten Prospekt zum Stand der Technik bildlich dargestellt unter der Überschrift "Rotations-Drehräumen". Bei diesem Bild trägt das Werkzeug jedoch nur eine sehr geringe Anzahl von Schneidkanten. Mit einem solchen Werkzeug wäre in der Praxis eine Bearbeitung eines Werkstückes nicht sinnvoll. Wegen der zu geringen Anzahl von Schneidkanten entstehen einerseits zwischen den einzelnen Schneidkanten zu große Radialsprünge und damit zu große Spantiefen und andererseits in Umfangsrichtung zu große Abstände und damit zu große Leerzeiten zwischen dem Arbeitsende einer vorangehenden Schneide und dem Arbeitseingriff der nachfolgenden Schneide. So sind folgerichtig auch aus der Praxis Werkzeuge nach diesem Prinzip bekannt, die in dichter Folge hintereinander in Umfangsrichtung Schneidplatten aufweisen.

Die bekannten Rotations-Drehräum-Werkzeuge stellen umlaufende Nuten unterschiedlicher Profile in Wellen oder wellenartigen Werkstücken wie z. B. Kurbelwellen her. Hierbei dreht sich das Werkstück sehr schnell und das Werkzeug langsam. Solche Werkzeuge machen es jedoch notwendig, nach Durchgang der letzten Schneide am Umfang das gesamte Werkzeug radial außer Eingriff mit dem Werkstück zu fahren, um einen Werkstückwechsel durchführen zu können. Gleichzeitig muß das Werkzeug stillgesetz werden, weil in gleichmäßigem Abstand der letzten Schneide folgend wieder die erste Schneide mit der Bearbeitung beginnen will. Dies erfordert einen verhältnismäßig hohen mechanischen als auch steuerungstechnischen Aufwand an den zugeordneten Bearbeitungsmaschinen. Da die Werkzeuge darüber hinaus sehr teuer sind, werden sie bisher nur in der Großserienfertigung eingesetzt.

Aus der Zeitschrift "Maschinenmarkt (1986) 34", ist unter dem Titel "Zerspankraft kompensieren'' mit dem Untertitel "Anordnen der Wendeschneidplatten auf drei Segmente verbessert Form beim Drehräumen" auf Seite 28 in Bild 8 eine Werkzeuganordnung für die Bearbeitung einer Kurbelwelle bekannt geworden, bei der in gleichmäßiger Aufteilung um den zu bearbeitenden Zapfen herum drei Rotations-Drehräumwerkzeuge angeordnet sind, bei denen der schneidplattenfreie Bereich mehr als 180° beträgt. Diese Anordnung ist lediglich vorgesehen, um die Biegebelastung des Werkstücks zu verringern. Zwar ist durch den schneidplattenfreien Bereich von mehr als 180° in entsprechender Drehstellung der Werkzeuge eine Werkstückentnahme bzw. ein Werkstückwechsel möglich, jedoch entsteht durch einen so großen freien Bereich eine viel zu lange Leerzeit bis die Werkzeuge wieder arbeiten können. Hierdurch entstehen wieder große Nebenzeiten, die vermieden werden sollen. Darüber hinaus muß man sich bei dieser Dreifachanordnung der Werkzeuge mit einer schneidplattenfreien Zone von mehr als 180° für eine ganz bestimmte Entnahmerichtung entscheiden und für die Entnahme die Zuführvorrichtung entsprechend anpassen und die Drehwinkellage der Werkzeuge überwachen und mit der Zuführeinrichtung koordinieren, so daß die heute weitgehend standardisierten Zuführeinrichtungen unerwünschterweise angepaßt werden müssen.

Der Erfindung liegt somit die Aufgabe zugrunde, ein nicht lineares Drehräumwerkzeug vorzuschlagen, welches eine Vereinfachung des Aufbaus und der Steuerung von Drehräummaschinen erlaubt, in der Großserie eine Verkürzung der Nebenzeiten erlaubt und auch in der Kleinserie rentabel einsetzbar sein kann.

Diese Aufgabe ist gelöst durch die Verwendung eines um eine zentrale Achse drehbaren Räumwerkzeuges zum Bearbeiten eines um eine Achse rotierbaren Werkstückes in einer Drehräummaschine, wobei mindestens neun Werkzeugschneiden und mindestens eine die Werkzeugschneiden enthaltende Gruppe von Werkzeugschneiden an Umfang des Werkzeuges vorgesehen sind, wobei einer ersten Schneide folgende Schneiden jeweils gegenüber der vorhergehenden Schneide einen größeren Abstand zur zentralen Achse aufweisen und wobei mindestens zwischen einer letzten und einer ersten Werkzeugschneide derselben oder einer nachfolgenden Gruppe von Werkzeugschneiden ein Öffnungswinkel von weniger als 180° und ein solcher Abstand und Freiraum besteht, daß in diesem Bereich des Umfangs des Werkzeuges eine ausreichend große Lücke sowohl in Umfangsrichtung als auch in radialer Richtung gelassen ist, so daß mindestens von diesen Schneiden bearbeitete Flächen des Werkstückes frei von Schneiden und Werkzeugbauteilen gehalten werden können und das Werkstück im Bereich dieser Lücke gewechselt werden kann. Es wird also mit dem Erfindungsgedanken die bei Räumwerkzeugen an sich bekannte und am Umfang angeordnete Lücke in besonderer Weise in Abhängigkeit von Werkstück- u. Maschinendimensionen bemessen und sodann ein solches Räumwerkzeug auf Drehräummaschinen als Drehräumwerkzeug verwendet, so daß dann, wenn während der Rotationsbewegung des Werkzeuges diese Lücke anstelle der bisherigen Schneiden dem Werkstück gegenüberliegt, mindestens die vom Werkzeug bisher bearbeiteten Flächen frei von Schneiden sind, so daß in diesem Drehzustand das Werkzeugs das Werkstück gewechselt werden kann, ohne daß Gefahr besteht, daß die bearbeiteten Flächen des Werkstücks während des Werkstückwechels von den Schneiden verletzt werden. Umgekehrt können in dieser Drehstellung des Werkzeugs auch die Schneiden des Werkzeugs nicht vom Werkstück während des Werkstückwechsels verletzt werden. Diese Gefahr ist bei herkömmlich aufgebauten Werkzeugen dieser Art deshalb so groß, weil Zuführeinrichtungen, die Werkstücke in einer Radialbewegung des Werkstücks wechseln, keine ausreichende seitliche Führung des Werkstückes durchführen können, so daß es immer zu Verletzungen kommen muß. Wenn vom herkömmlichen Werkzeug sogar Planflächen am Werkstück bearbeitet wurden, ist es unmöglich, das Werkstück in radialer Richtung zu entnehmen, ohne gleichzeitig Querriefen auf der bearbeiteten Planfläche zu hinterlassen und damit auch gleichzeitig die Schneidplatten zu verletzen. Aus diesem Grunde wird bei herkömmlichen Werkzeugen die letzte Schneidplatte vollständig außer Eingriff gedreht und danach das gesamte Werkzeug radial zurückgezogen. Erst dann wird das Werkstück ausgetauscht und das Werkzeug wieder radial in Arbeitsposition gefahren. Bei einer Verwendung des hier beschriebenen Werkzeuges auf Drehräummaschinen braucht die Radiallage des Werkzeuges nach Durchgang der letzten Schneide nicht geändert zu werden, um das Werkstück zu wechseln. Vielmehr steht dem Werkstück jetzt eine entsprechende und ausreichend große Lücke des Werkzeugs gegenüber, so daß im Bereich dieser Lücke das Werkstück gewechselt werden kann. Moderne Zuführeinrichtungen schaffen einen solchen Wechsel innerhalb weniger Sekunden, so daß das Werkzeug in vielen Fällen sogar kontinuierlich weiterdrehen kann während des Werkstückwechsels. Es kann dann nicht nur die radiale Verfahrbewegung des Werkzeuges sondern auch ein Zwischenstopp der Drehbewegung des Werkzeuges entfallen. Hierdurch können also aufwendige Schlitten mit einer Radialbewegung des Werkzeuges an den entsprechenden Maschinen entfallen und es können unter Umständen die Steuerungen und mechanischen Mittel für die Unterbrechung der Drehbewegung des Werkzeuges entbehrlich werden, wodurch der Maschinenaufbau vereinfacht werden kann. Der Einsatz eines solchen Werkzeuges in der Großserienfertigung wird nicht beeinträchtigt, sondern im Gegenteil durch Wegfall von Nebenzeiten für eine Schlittenbewegung, um das Werkzeug aus Arbeitsposition und wieder in Arbeitsposition zu bringen, verbessert. Gleichzeitig kann das Werkzeug dann, wenn die Werkzeuglücke dem Werkstück gegenübersteht, also unmittelbar nach Beendigung eines Arbeitsvorgangs, axial in eine andere Position gefahren werden, um eine andere Stelle am selben Werkstück oder an einem inzwischen gewechselten Werkstück zu bearbeiten. Damit kann mit einem solchen Werkzeug auch eine Kleinserie rentabel bearbeitbar werden.

Nach einer ergänzenden Ausgestaltung der Erfindung ist vorgeschlagen, daß Schneiden für eine Bearbeitung von Planflächen vorgesehen sind. Insbesondere dann, wenn Planflächen bearbeitet wurden, ist die erfindungsgemäße Gestaltung des Werkzeuges sehr vorteilhaft. Trotz der Bearbeitung von Planflächen gelingt es nämlich ohne Radialbewegung des Werkzeuges einen Werkstückwechsel ohne Gefahr der Verletzung der Planflächen vorzunehmen.

Nach weiterer Ausgestaltung der Erfindung ist vorgesehen, daß in Umfangsrichtung mindestens zwei Gruppen von Schneiden mit jeweils mindestens einer ersten und mindestens einer letzten Schneide vorgesehen sind. Hierdurch können mit dem selben Werkzeug unterschiedliche Profile am Werkstück erzeugt werden, was insbesondere bei der Herstellung von mittleren oder kleineren Serien kleinerer Werkstücke sehr vorteilhaft sein kann in Anwendung mit der sonstigen erfindungsgemäßen Gestaltung des Werkzeuges, weil das Werkzeug ja auch ohne radiale Lageveränderung axial am Werkstück entlang verfahrbar ist, ohne hierbei mit dem Werkstück zu kollidieren.

Eine andere Ausgestaltung der Neuerung wiederum sieht vor, daß mindestens einzelne Schneiden in mindestens doppelter Anordnung vorgesehen sind. Hierdurch kann trotz unterschiedlicher Belastung der einzelnen Schneiden eine einheitliche Standzeit für das gesamte Werkzeug erreicht werden.

Weiterhin ist nach der Erfindung vorgesehen, daß das Werkzeug einen um eine Achse drehbaren Grundkörper aufweist, der in Umfangsrichtung besetzt ist mit Schneidkantenträgern mit Schneidkanten, wobei ein Bereich kleiner als 180 Grad frei ist von Schneidkantenträgern zur Erzeugung einer Entnahmelücke. Dies ist eine besonders einfache Methode dann, wenn das Werkzeug aus Baugruppen zusammengesetzt ist, die Entnahmelücke zu erzeugen.

Ergänzend ist nach der Erfindung noch vorgesehen, daß die Schneiden so angeordnet sind, daß jede Gruppe eine andere Form am Werkstück herausarbeitet. Dies ist ein besonderer Vorteil bei der Anordnung mehrerer Gruppen, der weiter oben bereits erläutert wurde. Natürlich können mehrere Gruppen auch gleiche Werkzeuge aufweisen, so daß immer wechselweise die ein oder andere Gruppe zum Einsatz kommt, wodurch die Standzeit des Werkzeugs verlängert werden kann. Günstig ist eine solche Anordnung ganz allgemein auch dann, wenn das Werkzeug tief in ein Werkstück, z. B. eine Kurbelwelle, eintauchen muß und schon aus diesem Grunde große radiale Abmessungen aufweisen muß. Es ist dann möglich, daß nur ein kleinerer Teil des Umfangs für die notwendige Bearbeitung mit Werkzeugschneiden bestückt werden muß. Dies würde nachteiligerweise dazu führen, daß das Werkzeug bei Arbeitsbeginn immer wieder in Ausgangsposition zurückgedreht oder über den freien Bereich durchgedreht werden müßte. Dies aber ist einerseits unnötiger Steueraufwand und andererseits Verlust von Nebenzeit. Bei der Anordnung mehrerer gleicher Gruppen von Schneidkanten am Umfang des Werkzeugs unter gleichzeitiger Anordnung der erfindungsgemäßen Entnahmelücken können die genannten Nachteile vermieden werden.

Eine weitere Ausgestaltung der Erfindung insbesondere für die Bearbeitung der Lagerstellen an Kurbelwellen sieht vor, daß mindestens nach einer letzten Werkzeugschneide das Werkzeug einen solchen Freiraum aufweist, daß das Werkzeug ohne radiale Lagerveränderung axial entlang der Kurbelwelle ohne Kollision verfahren werden kann. Der grundlegende Erfindungsgedanke bleibt auch bei der Gestaltung der Werkzeuge für die Bearbeitung von Kurbelwellen erhalten, jedoch muß bei der Gestaltung des Freiraumes auf die besondere Gestalt der Kurbelwellen geachtet werden. Hierbei wird man jedoch in vielen Fällen davon ausgehen müssen, daß eine Axialverschiebung des Werkzeuges trotz des notwendigen Freiraums nur bei einer bestimmten Drehwinkellage der zu bearbeitenden Kurbelwelle in der Maschine möglich ist. Das Einfahren einer Kurbelwelle in eine bestimmte Drehwinkellage ist aber bei Kurbelwellenbearbeitungsmaschinen allgemein bekannt und üblich.

Eine weitere Ausgestaltung der Erfindung sieht vor, daß die Schneidkanten auf Schneidkantenträgern so angeordnet sind, daß sie entlang einer wenigsten angenähert kreisförmigen Umfangslinie liegen, deren Zentrum um einen definierten Betrag zur Rotationsachs versetzt ist. Dies vereinfacht erheblich die Herstellung des Werkzeugs, weil hierdurch auf die Erzeugung einer schwer herstellbaren Spiralform verzichtet werden kann.

Ergänzend ist nach der Erfindung dann noch vorgesehen, daß jeder Schneidkantenträger einen Werkzeugumfangsbereich von weniger als 180 Grad umfaßt. Hierdurch wird Freiraum geschaffen für die notwendige Entnahmelücke.

Eine andere Ergänzung der Erfindung sieht vor, daß jeder Schneidkantenträger einer Gruppe mehrere Einzelsegmente aufweist. Hierdurch ist eine variable Gestaltung der Werkzeugabmessungen möglich und es kann außerdem wiederum die sonst übliche Spiralform der Werkzeugsumfangsfläche vermieden werden. Sie kann jedoch bei Bedarf durch solche Einzelsegmente auch aufgebaut werden.

Schließlich ist nach der Erfindung noch vorgeschlagen, daß Mittel zur Kompensation des Verschleißes der Schneidkanten vorgesehen sind. Ganz allgemein findet man vielfach an Zerspanungswerkzeugen deren Schneidkanten von Schneidplatten gebildet werden, Schneidplattenaufnahmen, die eine geringfügige Verlagerung dieser Schneidplatten in mindestens eine Richtung zur Verschleißkompensation des Schneidkantenverschleißes ermöglichen. Solche Einrichtungen sind auch vorteilhaft verwendbar am erfindungsgemäßen Werkzeug und erhöhen dessen Standzeit und Genauigkeit.

Die Erfindung soll nun anhand der in den Skizzen dargestellten Ausführungsbeispiele erläutert werden.

Es zeigen:
- Figur 1:: Seitensicht des erfindungsgemäßen Werkzeuges mit zwei Schneidkantengruppen und zwei Entnahmelücken in Entnahmeposition am Werkstück.
- Figur 2:: Schnitt I - I nach Figur 1
- Figur 3:: Werkzeug die Figur 1 jedoch mit nur einer Schneidkantengruppe in Arbeitsposition

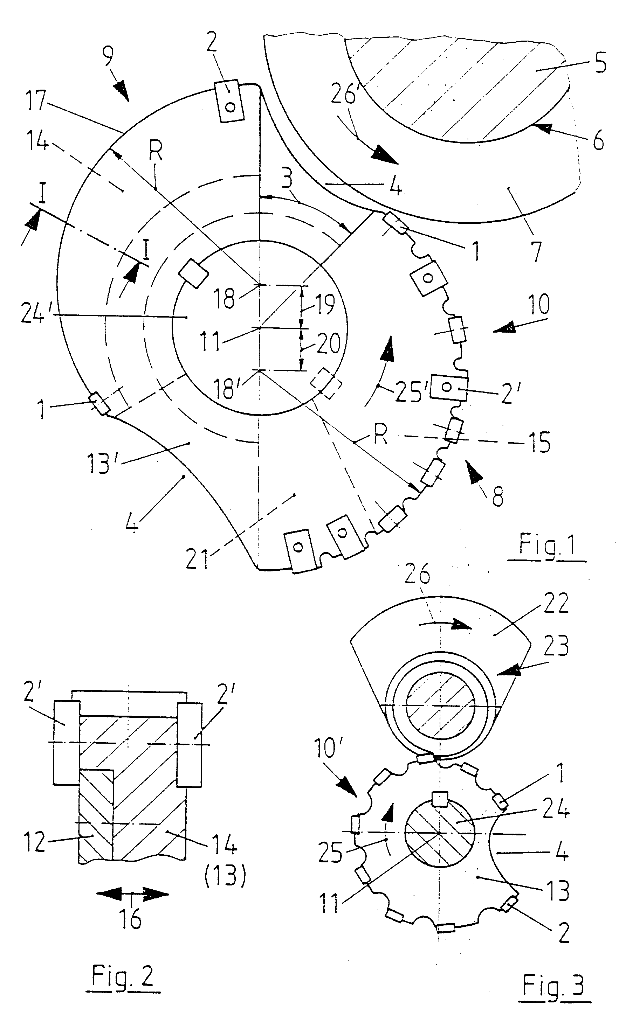

In Figur 3 ist ein erfindungsgemäßes Werkzeug bei der Bearbeitung des Zapfens 23 einer Kurbelwelle 22 dargestellt. Das Werkzeug 10' weist einen scheibenförmigen Grundkörper 13 auf, der auf einer Welle 24 über eine übliche Nut-Feder-Verbindung drehfest angeordnet ist. Die Umfangskontur des Grundkörpers 13 ist spiralig und weist in dichter Folge hintereinander angeordnete Werkzeugschneiden 1, 2 auf. Die Werkzeuge sind in an sich bekannter Weise angeordnet und befestigt und bestehen aus handelsüblichen Schneidplatten. Die Aufeinanderfolge und Position der einzelnen Schneiplatten ist hierbei ebenfalls in bekannter Weise so, daß die dem Werkzeug gestellte Bearbeitungsaufgabe gelöst wird. Während der Bearbeitung der Kurbelwelle 22 dreht sich das Werkzeug 10' langsam in Richtung des Pfeils 25. Die radiale Position des Werkzeugs 10' zur Kurbelwelle 22 ist hierbei so, daß als erstes die Schneidplatte mit dem Bezugszeichen 1 in Arbeitsposition kommt und den Bereich des Zapfens 23 bearbeitet, während sich hierzu die Kurbelwelle 22 mit ausreichender Geschwindigkeit zur Erzeugung der notwendigen Schnittgeschwindigkeit in Richtung des Pfeils 26 dreht. Durch die Drehung des Werkzeugs 10' in Richtung des Pfeils 25 kommen die am Umfang des Werkzeugs 10' hintereinander angeordneten Schneidplatten nacheinander zum Eingriff am Werkstück und dringen dabei radial immer tiefer in das Werkstück ein, weil die aufeinander folgenden Schneidkanten jeweils eine radial weiter außen liegende Position als die vorhergehende Schneidkante einnehmen.

Erfindungsgemäß sind jedoch die einzelnen Schneidkanten nicht über den gesamten Umfang des Werkzeugs 10' verteilt, sondern es besteht vielmehr zwischen dem ersten Werkzeug mit dem Bezugszeichen 1 und dem letzten Werkzeug mit dem Bezugszeichen 2 ein Freiraum mit einem Öffnungswinkel 3 (siehe Figur 1), der allerdings kleiner als 180 Grad sein soll. Dieser Freiraum 4 kann sich radial durchaus in den Grundkörper 13 des Werkzeugs 10' erstrecken, so wie in Figur 3 dargestellt.

Mit fortschreitender Bearbeitung nähert sich das letzte Werkzeug 2 immer mehr der Arbeitsstelle und kommt schleißlich in Schneidkontakt, so daß der Zapfen 23 auf den schraffiert dargestellten Durchmesser zerspant ist. Gleichzeitig werden die angrenzenden Planflächen mit bearbeitet. Sobald während der Weiterdrehung des Werkzeugs 2 in Richtung des Pfeils 25 das Werkzeug 2 außer Eingriff kommt, steht der Freiraum 4 der Kurbelwelle 22 gegenüber und es kann ohne Gefahr der Verletzung irgendwelcher bearbeiteter Flächen und auch ohne Gefahr der Werkzeugverletzung die Kurbelwelle 22 gegen eine neue zu bearbeitende Kurbelwelle ausgetauscht werden. Dieser Wechsel geschieht mit bekannten Zuführvorrichtungen innerhalb weniger Sekunden, so daß während des Wechsels das Werkzeug 10' auch kontinuierlich weiterdrehen kann, so daß unmittelbar nach vollzogenem Werstückwechsel die Schneide 1 wieder in Arbeitskontakt mit dem Werkstück steht. Der Freiraum 4 ermöglicht also einen Werkstückwechsel ohne radiale Verschiebung des Werkzeugs 10', ohne Gefahr der Verletzung von bearbeitetem Werkstück und Werkzeug und bei richtiger Auslegung der Abmessung des Freiraums 4 auch ohne Unterbrechung der Drehbewegung des Werkzeugs 10' in Richtung des Pfeils 25. Hierdurch werden Nebenzeiten eingespart und ein einfacherer Maschinenaufbau ermöglicht. Es kann aber auch bei der Kleinserienfertigung dann, wenn der Freiraum 4 dem Werkstück 22 in dessen richtiger Drehlage gegenübersteht, daß Werkzeug 10' in seiner Drehbewegung angehalten und in Richtung der Achse 11 verschoben werden, um einen weiteren Zapfen 23 beispielsweise an der selben Kurbelwelle 22 zu bearbeiten.

Das Werkzeug nach Figur 3 zeigt einen einzigen einstückigen Schneidkantenträger 13, der mit Ausnahme des einzelnen Freiraums 4 auf seiner gesamten Umfangsfläche durchgehend mit Werkzeugschneiden besetzt ist. Eine Variante hierzu ist in Figur 1 dargestellt. In Figur 1 sind der Einfachheit halber mehrere Konstruktionsvarianten gleichzeitig dargestellt. Zunächst sei wieder davon ausgegangen, daß ein dem Grundkörper 13 entsprechender einstückiger Grundkörper 13' vorgesehen sei, der mit einer Weile 24' über eine bekannte Nut-Feder-Verbindung drehfest verbunden ist. Die Achse 11 der Welle 24' bildet wiederum die Drehachse.

Der Grundkörper 13' weist in sich gegenüberliegender Anordnung zwei Bereiche mit kreisförmiger Umfangsfläche auf, die den Radius R aufweisen und deren Mittelpunkt 18 bzw. 18' um einen Betrag 19 bzw. 20 von der Achse 11 entfernt liegt. Diese kreisbogenförmigen Bereiche erstrecken sich über einen Winkel von weniger als 180°, so daß zwischen den beiden kreisförmigen Bereichen ebenfalls in sich gegenüberliegender Anordnung je ein Freiraum 4 mit einem Öffnungswinkel 3 von weniger als 180 Grad gebildet wird. Der Freiraum 4 ist radial einwärts bei der beschriebenen Bauart wieder durch den Oberflächenbereich des Grundkörpers 13, der in diesem Bereich 3 durch die gebogene Linie dargestellt ist, begrenzt.

Zur Durchführung einer Bearbeitung am Werkstück 5 wird das Werkstück 5 in Richtung des Pfeils 26' mit der notwendigen Drehgeschwindigkeit zur Erzeugung einer ausreichenden Schnittgeschwindigkeit gedreht, während das Werkzeug 10 langsam in Richtung des Pfeils 25' dreht, wie dies zum Werkzeug nach Figur 3 bereits beschrieben wurde.

In der in Figur 1 dargestellten Drehlage befindet sich das Werkzeug 10 in Entnahmeposition für das Werkstück 5. Das Werkstück 5 ist fertig bearbeitet und es wurde während der Bearbeitung die Werkstückfläche 6 und die zugehörige Planfläche 7 hergestellt. Im Werkstück 5, das eine Welle oder auch eine Kurbelwelle sein kann, ist also eine Nut oder Rille eingearbeitet worden, die von den Planflächen 7 und der inneren Fläche 6 begrenzt wird. In der dargestellten Drehlage des Werkzeugs 10 kann nunmehr ein Werkstückwechsel in der bereits zu Figur 3 beschriebenen Art vorgenommen werden oder es kann das Werkzeug 10 in Richtung der Achse 11 verschoben werden.

Im Ausführungsbeispiel hat die Werkzeugschneide, die das Bezugszeichen 2 trägt, zuletzt gearbeitet und es kommt bei einem neuen Werkstück oder nach einer axialen Positionsänderung des Werkzeugs 10, daß sich entgegen der Drehrichtung des Drehrichtungspfeils 25' anschließende Schneidelement 1 wieder zum Arbeitseinsatz am Werkstück 5.

Es ist natürlich möglich die entlang der kreisförmigen Umfangslinie 17 in sich gegenüberliegender Anordnung am Werkzeug 10 vorgesehenen einzelnen Schneidkanten oder Schneidelemente für jeweils unterschiedliche Bearbeitungsaufgaben auszulegen und anzuordnen. Es können jedoch die Bearbeitungsaufgaben auch gleich sein.

Es ist nicht erforderlich, daß der Grundkörper 13' des Werkzeugs 10 als einstückige Scheibe zur Aufnahme der einzelnen Schneidkanten oder Schneidelemente ausgebildet ist. So ist es auch beispielsweise möglich einen Grundkörper 12 vorzusehen, der mit einer nicht näher dargestellten Nabe auf der Welle 24' angeordnet und über eine bekannte Nut-Feder-Verbindung mit der Welle 24' drehfest verbunden ist. Diese Nabe weist dann als Grundkörper 12 einen Flansch auf, wie dies in Figur 2 dargestellt ist. An diesem Flansch können dann segmentartige Schneidkantenträger 14 und 15 (Figur 1) befestigt werden, die wieder eine kreisförmige Umfangslinie 17 aufweisen, mit einem Zentrum, wie bereits vorbeschrieben. Die Schneidkantenträger 14 und 15 weisen dann mit den an ihnen befestigten Schneidkanten 2 Gruppen 8 und 9 von Schneiden auf, die für die gleiche oder auch für unterschiedliche Bearbeitungsaufgaben ausgelegt sein können. Bei dieser Ausführungsform, bei der vorzugsweise die Schneidkantenträger 14 und 15 den Flansch des Grundkörpers 12 umfassen, wie dies in Figur 2 dargestellt ist, können die Schneidkantenträger 14 und 15 leicht am Grundkörper 12 ausgetauscht werden, so daß eine rasche Umrüstung des Werkzeugs 10 möglich wird. Um den Öffnungswinkel 3 so zu gestalten, daß ein in radialer Richtung möglichst tiefer Freiraum 4 entsteht, ist es möglich, im Bereich des Öffnungswinkels 3 den Flansch des Grundkörpers 12 bis zur Nabe zu unterbrechen. In diesem Bereich ist eine Bewegung des Werkzeugs 10 in Richtung der Achse 11, also in Richtung des Pfeils 16, ungehindert möglich. Eine Kollision mit dem Werkstück kann vermieden werden.

Es ist aber auch möglich die Schneidkantenträger 14 und 15 aus Einzelsegmenten 21, wie sie in Figur 1 angedeutet sind, aufzubauen. Hierdurch kann sehr schnell die Schneidkantenzusammensetzung variiert werden. Es können dann leicht jeweils anderer Einzelsegmente 21 mit anderen Werkzeugschneiden 1, 2 oder 2' in andere Anordnung oder mit anderen Eigenschaften eingesetzt werden.

## Patentansprüche

1. Verwendung eines um eine zentrale Achse drehbaren Räumwerkzeuges zum Bearbeiten eines um eine Achse rotierbaren Werkstückes in einer Drehräummaschine, wobei mindestens neun Werkzeugschneiden und mindestens eine die Werkzeugschneiden enthaltende Gruppe von Werkzeugschneiden am Umfang des Werkzeuges vorgesehen sind, wobei einer ersten Schneide (1) folgende Schneiden jeweils gegenüber der vorhergehenden Schneide einen größeren Abstand zur zentralen Achse (11) aufweisen und wobei mindestens zwischen einer letzten (2) und einer ersten (1) Werkzeugschneide derselben oder einer nachfolgenden Gruppe (8,9) von Werkzeugschneiden ein Öffnungswinkel (3) von weniger als 180° und ein solcher Abstand und Freiraum (4) bestellt, daß in diesem Bereich des Umfangs des Werkzeuges eine ausreichend große Lücke sowohl in Umfangsrichtung als auch in radialer Richtung gelassen ist, so daß mindestens von diesen Schneiden (1,2) bearbeitete Flächen (6,7) des Werkstückes (5) frei von Schneiden und Werkzeugbauteilen gehalten werden können und das Werkstück im Bereich dieser Lücke gewechselt werden kann.

2. Verwendung nach Anspruch 1, dadurch gekennzeichnet, daß Schneiden, (2,2') für eine Bearbeitung von Planflächen (7) vorgesehen sind.

3. Verwendung nach einem der Ansprüche 1 oder 2, dadurch gekennzeichnet, daß in Umfangsrichtung mindestens zwei Gruppen von Schneiden (8,9) mit jeweils einer ersten (1) und mindestens einer letzten (2) Schneide vorgesehen sind.

4. Verwendung nach einem der Ansprüche 1 bis 3, dadurch gekennzeichnet, daß mindestens einzelne Schneiden in mindestens doppelter Anordnung vorgesehen sind.

5. Verwendung nach mindestens einem der Ansprüche 1 bis 4, dadurch gekennzeichnet, daß das Werkzeug einen um eine Achse (11) drehbaren Grundkörper (12) aufweist, der in Umfangsrichtung besetzt ist mit Schneidkantenträgern (14,15) mit Schneidkanten (1,2,2') wobei ein Bereich (3,4) kleiner als 180 Grad frei ist von Schneidkantenträgern (14,15) zur Erzeugung einer Entnahmelücke.

6. Verwendung nach einem der Ansprüche 1 bis 5, dadurch gekennzeichnet, daß die Schneiden so angeordnet sind, daß jede Gruppe (8,9) eine andere Form am Werkstück (5) herausarbeitet.

7. Verwendung nach einem der Ansprüche 1 bis 6, für die Bearbeitung der Lagerstellen an Kurbelwellen, dadurch gekennzeichnet, daß mindestens nach einer letzten Werkzeugsschneide (2) das Werkzeug (10,10') einen solchen Freiraum (4) aufweist, daß das Werkzeug (10,10') ohne radiale Lageveränderung axial (16) entlang der Kurbelwelle ohne Kollision verfahren werden kann.

8. Verwendung nach einem der Ansprüche 1 bis 7, dadurch gekennzeichnet, daß die Schneidkanten (1,2,2') auf Schneidkantenträgern (14,15) so angeordnet sind, daß sie entlang einer wenigstens angenähert kreisförmigen Umfangslinie (17) liegen, deren Zentrum (8,8') um einen definierten Betrag (19,20) zur Rotationsachse (11) versetzt ist.

9. Verwendung nach Anspruch 8, dadurch gekennzeichnet, daß jeder Schneidkantenträger (14,15) einen Werkzeugsumfangsbereich von weniger als 180 Grad umfaßt.

10. Verwendung nach einem der Ansprüche 1 bis 9, dadurch gekennzeichnet, daß jeder Schneidkantenträger (15) eine Gruppe mehrerer Einzelsegmente (21) aufweist.

11. Verwendung nach einem der Ansprüche 1 bis 10, dadurch gekennzeichnet, daß Mittel zur Kompensation des Verschleißes der Schneidkanten (1,2,2') vorgesehen sind.

## Claims

1. Use of a rotary broaching tool which is rotatable about a central axis for the machining of a workpiece rotatable about an axis in a rotary broaching machine, wherein at least nine tool cutters and at least one group of tool cutters containing the tool cutters are provided about the periphery of the tool, wherein cutters following a first cutter (1) each are at a greater distance from the central axis (11) than the respective preceding cutter, and wherein at least between a last tool cutter (2) and a first tool cutter (1) of that or a subsequent group (8, 9) of tool cutters there is an included angle (3) of less than 180° and such a free-space interval (4) that in this region of the periphery of the tool a sufficiently large gap is left both in the peripheral direction and also in the radial direction that at least surfaces (6, 7) of the workpiece (5) machined by these cutters (1, 2) can be kept free from cutters and tool components and the workpiece can be exchanged in the region of this gap.

2. Use according to claim 1, characterised in that cutters (2, 2') are provided for a machining of plane surfaces (7).

3. Use according to one of claims 1 or 2, characterised in that at least two groups of cutters (8, 9) are provided in the circumferential direction, each with at least one first cutter (1) and at least one final cutter (2).

4. Use according to one of claims 1 to 3, characterised in that at least some cutters are provided in at least a doubled array.

5. Use according to at least one of claims 1 to 4, characterised in that the tool comprises a body (12) rotatable about an axis (11), said body being equipped in the circumferential direction with cutting edge supports (14, 15) having cutting edges (1, 2, 2'), and wherein a zone (3, 4) subtending less than 180° is free from cutting edge supports (14, 15) in order to produce a take-out gap.

6. Use according to one of claims 1 to 5, characterised in that the cutters are so arranged that each group (8, 9) produces a different shape on the workpiece (5).

7. Use according to one of claims 1 to 6, for the machining of the bearing surfaces on crank shafts, characterised in that at least following a final tool cutter (2) the tool (10, 10') has a free-space interval (4) such that the tool (10, 10') can be displaced without radial positional change axially (16) along the crankshaft without collision.

8. Use according to one of claims 1 to 7, characterised in that the cutting edges (1, 2, 2') are so arranged on cutting edge supports (14, 15) that they lie along an at least approximately circular circumferential line (17) whose centre (8, 8') is offset by a predetermined amount (19, 20) relative to the axis of rotation (11).

9. Use according to claim 8, characterised in that each cutting edge support (14, 15) encompasses a circumferential region of the tool of less than 180°.

10. Use according to one of claims 1 to 9, characterised in that each cutting edge support (15) comprises a group of several individual segments (21).

11. Use according to one of claims 1 to 10, characterised in that means are provided for compensating for the wear of the cutting edges (1, 2, 2').

## Revendications

1. Utilisation d'un outil de brochage rotatif mobile autour d'un axe central, destiné à l'usinage, dans une machine à brocher rotative, d'une pièce à brocher pouvant tourner autour d'un axe, au moins neuf tranchants d'outil et au moins un groupe de tranchants d'outil entourant les tranchants d'outil étant prévus à la périphérie d'un outil, des tranchants suivant un premier tranchant (1) présentant à chaque fois, par rapport au tranchant précédent, un écartement plus important à l'axe central (11) et un angle d'ouverture (3) inférieur à 180°, un tel écartement et une telle zone de dégagement (4) existant au moins entre un dernier tranchant d'outil (2) et un premier tranchant d'outil (1) du même groupe ou d'un groupe suivant de tranchants d'outil qu'un creux suffisamment important est laissé dans cette zone de la périphérie de l'outil, aussi bien dans la sens circonférentiel que dans le sens radial, de façon à ce qu'au moins des surfaces (6, 7) de la pièce à brocher (5) usinées par ces tranchants (1, 2) puissent être maintenues exemptes de tranchants et de composants d'outil et à ce que la pièce à usiner puisse être changée dans la zone de ce creux.

2. Utilisation selon la revendication 1, caractérisée en ce que des tranchants (2, 2') sont prévue pour un usinage de surfaces planes (7).

3. Utilisation selon l'une des revendications 1 ou 2, caractérisée en ce que, dans le sens circonférentiel, au moins deux groupes de tranchants (8, 9) sont prévus avec à chaque fois au moins un premier tranchant (1) et au moins un dernier tranchant (2).

4. Utilisation selon l'une des revendications 1 à 3, caractérisée en ce qu'au moins des tranchants séparés sont prévus avec une disposition au moins double.

5. Utilisation selon au moins l'une des revendications 1 à 4, caractérisée en ce que l'outil présente un corps de base (12) mobile autour d'un axe (11) et qui est garni dans le sens circonférentiel de supports d'arêtes coupantes (14, 15) munis d'arêtes coupantes (1, 2, 2'), une zone (3, 4) inférieure à 180 degrés étant exempte de supports d'arêtes coupantes (14, 15) pour former un creux d'enlévement.

6. Utilisation selon l'une des revendications 1 à 5, caractérisée en ce que les tranchants sont disposés de telle sorte que chaque groupe (8, 9) ébauche une forme différente sur la pièce à brocher (5).

7. Utilisation selon l'une des revendications 1 à 6, destinée à l'usinage des points d'appui des vilebrequins et caractérisée en ce qu'au moins après un dernier tranchant d'outil (2), l'outil (10, 10') présente une telle zone de dégagement (4) qu'il puisse être déplacé sans collision, de façon axiale (16) et sans modification radiale de position, le long du vilebrequin.

8. Utilisation selon l'une des revendications 1 à 7, caractérisée en ce que les arêtes coupantes (1, 2, 2') sont disposées de telle sorte sur les supports d'arêtes coupantes (14, 15) qu'elles sont situées le long d'une ligne périphérique au moins approximativement circulaire (17) dont le centre (8, 8') est décalé d'une valeur définie (19, 20) par rapport à l'axe de rotation (11).

9. Utilisation selon la revendication 8, caractérisée en ce que chaque support d'arêtes coupantes (14, 15) entoure une zone périphérique de l'outil de moins de 180 degrés.

10. Utilisation selon l'une des revendications 1 à 9, caractérisée en ce que chaque support d'arêtes coupantes (15) présente un groupe de plusieurs segments séparés (21).

11. Utilisation selon l'une des revendications 1 à 10, caractérisée en ce que des moyens de compensation de l'usure des arêtes coupantes (1, 2, 2') sont prévus.
